# EUROPEAN PATENT APPLICATION

(11) **EP 1 876 522 A1**
(43) Date of publication of application: **09.01.2008**
(21) Application number: 06731504.4
(22) Date of filing: 10.04.2006
(51) Int. Cl.: G06F 3/16, G06F 13/00, G10L 13/00, G10L 13/08

(54) **AUDIO REPRODUCING METHOD, CHARACTER CODE USING DEVICE, DISTRIBUTION SERVICE SYSTEM, AND CHARACTER CODE MANAGEMENT METHOD**

(30) Priority: 12.04.2005 JP 2005114839
(71) Applicant: Sharp Kabushiki Kaisha, Osaka-shi, Osaka 545-8522 (JP)
(72) Inventor: MUNAKATA, Tadahiko, 2850855 (JP)
(74) Representative: Müller, Frithjof E.
(86) International application number: PCT/JP2006/307557
(87) International publication number: WO 2006/109767

(57) **Abstract**

A character code is associated with sound as well as character or sign so as to enhance expressiveness on the Internet or in electronic mail. Sound data is recorded in the character code using device in association with the character code. The user can reproduce an intended sound in the same way as he or she displays a character on the character code using device, whereby the user can enhance his or her expressiveness on the Internet or in electronic mail, for example.

## Description

### TECHNICAL FIELD

The present invention relates to an audio reproducing method, a character code using device, a distribution service system, and a character code management method for reproduction of sound or voice simultaneously with the display of a character or sign.

### BACKGROUND ART

In order to handle characters and signs in computers or on the Internet, a character code system is set up in advance in which each character or sign is associated with a unique character code, and processes in the computer or transmission/reception over the Internet are carried out using such character codes. There are several character code systems; in the S-JIS (Shift-JIS) code, for example, which is used in PCs (personal computers) or the like, the Japanese "kana" phonogram character " 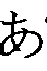 " [a] is associated with character code "82A0."

However, since new characters or signs cannot be added to such predetermined character codes, communications companies and the like associate new, original signs with unused character codes and use them so as to diversify expression in electronic mail or Web sites.

Although such original signs are often usable only in a limited environment, such as among the users of the communications company or the same manufacturer, the original signs, which are often called "pictograms" among cellular phone users in particular, are being widely used for their expressivity.

Since computers, cellular phones, and other devices handling characters and signs using a character code system are equipped with voice output means in addition to input means and display means, technologies have also been developed that utilize voice in electronic mail, in addition to displaying characters and signs.

JP Patent Publication (Kokai) No. 2003-150507 A discloses that, in connection with an electronic mail function-equipped terminal, pictograms and associated sound data are stored so that, upon viewing of electronic mail in which a pictogram is described, voice associated with ordinary characters is outputted to read out the characters in the electronic mail and, in addition, sound data associated with the pictogram is reproduced and outputted.

However, in the aforementioned conventional art where sound data is stored in an electronic mail function-equipped terminal, pictograms and sound data are simply stored in association with each other. Thus, if the sender and the receiver use different communications companies, or if the manufacturers of their devices are different, sound data not intended by the sender of electronic mail might be reproduced on the receiving end, or the sound data intended by the sender might not be reproduced on the receiver end at all because the sound data is not similarly associated with a pictogram in the electronic mail function-equipped terminal on the receiver end.

With regard to characters and signs other than those pictograms, there are many characters for which the user's feeling could be emphasized if associated with sound, such as the Chinese characters for "laugh" or "thunder," which are a type of ideogram. Furthermore, there are many uses not just in electronic mail but also in Web sites or in chatting where sound can enhance expression.

In view of such situation, it is an object of the present invention to enhance expression on the Internet or in electronic mail by using sound by associating character codes with sound in addition to characters and signs.

### DISCLOSURE OF THE INVENTION

The aforementioned object is achieved by the present invention by associating a character code with sound or voice as well as character or sign, so that a relevant sound or voice recorded in an electronic device can be reproduced simultaneously with the display of a relevant character or sign recorded in the same electronic device with reference to a character code. Thus, the invention enables the creation of an expressive passage attuned to the creator's intention.

In accordance with the present invention, the sender can enhance his or her expressiveness and communicate his or her intention more accurately in electronic mail, via a messenger, or on a Web site by transmitting sound to the receiver.

### BRIEF DESCRIPTION OF THE DRAWINGS

Fig. 1 shows a functional block diagram of an electronic mail terminal as a character code using device according to a first embodiment of the present invention.
Fig. 2 shows conceptually an example of a character code recording unit for recording character code management data in an audio reproducing method according to the present embodiment.
Fig. 3 shows conceptually a variation of the character code recording unit shown in Fig. 2 for recording character code management data.
Fig. 4 shows a flowchart of an example of an input method in the electronic mail terminal as the character code using device of the present embodiment.
Fig. 5 shows a flowchart of a method of displaying received mail and reproducing sound in the electronic mail terminal as the character code using device of the present embodiment.
Fig. 6 shows an example of a voice reproduction and display method for received mail in the electronic mail terminal as the character code using device of the present embodiment, the received mail containing a character code associated with sound or voice.
Fig. 7 shows an example of display of a character code contained in received mail that is associated with sound or voice on a display device in the electronic mail terminal as the character code using device of the present embodiment.
Fig. 8 shows a variation of the display screen of the display device on which the character sequence of the text of received mail content is displayed in the electronic mail terminal as the character code using device of the present embodiment, and an audio reproducing method on this display screen.
Fig. 9 shows conceptually an example of a character code recording unit for recording character code management data in an audio reproducing method according to a second embodiment of the present invention.
Fig. 10 shows a flowchart of a method of entering sound or voice that is recorded without being associated with a character or sign in the electronic mail terminal as the character code using device of the present embodiment.
Fig. 11 shows an example of the screen display of a list of character codes in the audio reproducing method of the present embodiment, the list indicating the association between character codes with which sound alone is associated and word data indicating the relevant sound or voice.
Fig. 12 shows an example of an electronic mail creation screen utilizing the audio reproducing method of the present embodiment.
Fig. 13 shows an example of an electronic mail reception screen utilizing the audio reproducing method of the present embodiment.
Fig. 14 shows an example of electronic mail in which a character code associated with sound alone is used in the title portion thereof in accordance with the audio reproducing method of the present embodiment.
Fig. 15 shows a distribution service system according to an embodiment of the present invention.

### BEST MODE OF CARRYING OUT THE INVENTION

### First Embodiment

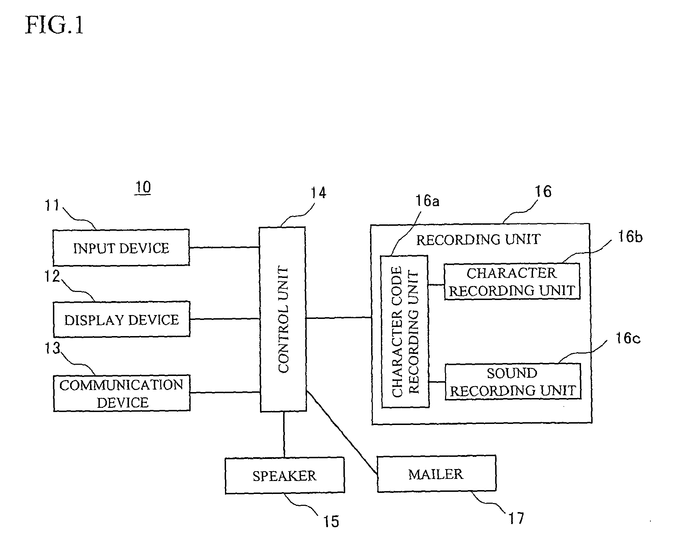

In the following, an audio reproducing method and a character code using device in which the audio reproducing method is applied according to a first embodiment of the invention are described with reference to Figs. 1 to 4.

Fig. 1 shows a functional block diagram of an electronic mail terminal as the character code using device according to the first embodiment of the present invention.

An electronic mail terminal 10 comprises an input device 11, a display device 12, a communication device 13, a control unit 14, a speaker 15, a recording unit 16, and a mailer (mail client) 17.

The input device 11 comprises instruction keys for the instruction of creation, transmission, reception, and viewing or the like of electronic mail, character and sign keys used for the creation and the like of the content of transmitted mail, and operation keys such as scroll keys which are used during the creation, viewing, or the like of mail content. The input device 11 is thus used for the user's input or setting instructing operations.

The display device 12 comprises a display unit such as an LCD (Liquid Crystal Display) or an ELD (Electro Luminescence Display) for displaying various information, including the content of created, transmitted, or received mail, for example.

The communication device 13 is used for carrying out the transmission and reception of various information including electronic mail with a server computer of the communications company to which the electronic mail terminal 10 is connected.

The control unit 14 controls the individual units of the electronic mail terminal 10.

The speaker 15 outputs the various information including the received mail content via voice.

The recording unit 16 stores the transmitted or received electronic mail and records various information used for the creation, transmission/reception, and viewing of electronic mail. In the present embodiment, the recording unit 16 comprises a character code recording unit 16a, a character recording unit 16b, and a sound recording unit 16c.

The character code recording unit 16a records character code management data, which is data used for the management of the association between the character or sign recorded in association with each character code and the sound or voice recorded in association with each character code.

The character recording unit 16b records character data and sign data, such as kana entry reading data and display data, for the conversion of each of the characters and signs that are recorded in association with character codes.

The sound recording unit 16c records voice data for the output of various sound or voice via the speaker 15.

The mailer 17 is used for the creation, transmission, and reception of electronic mail and for the storage and management of received electronic mail. It causes the control unit 14 to function as an electronic mail storage/management means.

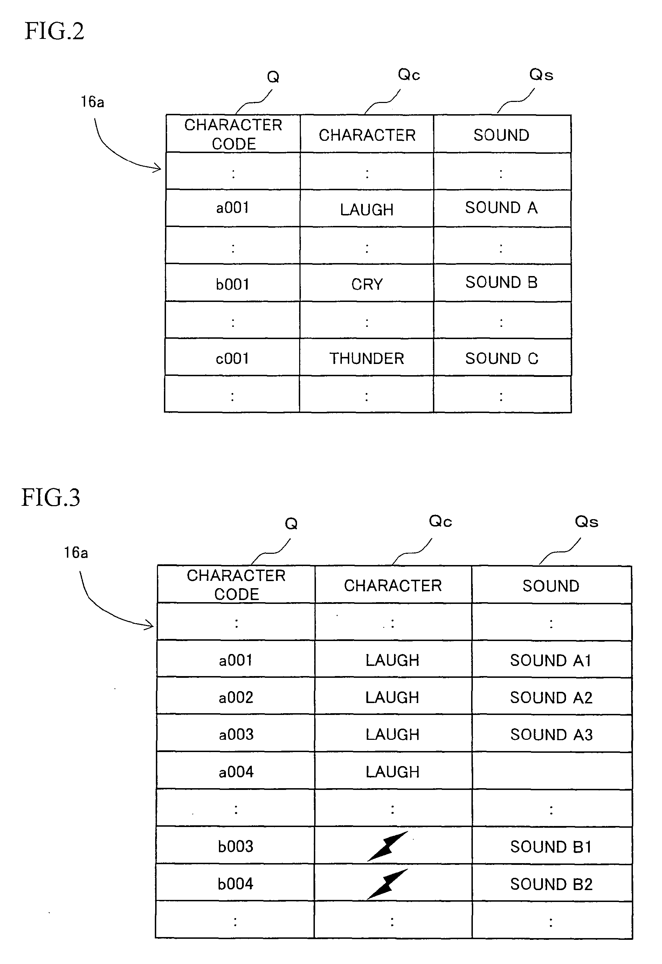

Hereafter, an example of a character code management method in the audio reproducing method of the present embodiment is described with reference to Figs. 2 and 3.

Fig. 2 shows conceptually an example of the character code recording unit for recording character code management data in the audio reproducing method of the present embodiment.

Fig. 3 shows conceptually a variation of the character code recording unit for recording the character code management data shown in Fig. 2.

As show in Figs. 2 and 3, the character code recording unit 16a records a character or sign Qc and a sound or voice Qs in association with each character code Q.

The characters (or signs) Qc as shown are not the character data or sign data per se that are recorded in the aforementioned character recording unit 16b; they are identifying data for identifying corresponding character data or sign data from among the various character data and sign data recorded in the character recording unit 16b. Similarly, the sound Qs is not the voice data per se recorded in the aforementioned sound recording unit 16c; it is identifying data for identifying corresponding voice data from among the various voice data recorded in the sound recording unit 16c.

In the character code recording unit 16a shown in Fig. 2, each character (or sign) Qc is associated with a single sound (or voice) Qs.

In the illustrated example, character code a001 is associated with the Chinese character for "laugh" (i.e., identifying data for Chinese character "laugh") and with sound A. Character code b001 is associated with the Chinese character for "cry" (i.e., identifying data for Chinese character "cry") and with sound B. Character code c001 is associated with the Chinese character for "thunder" (i.e., identifying data for Chinese character "thunder") and with sound C.

In contrast, in the character code recording unit 16a shown in Fig. 3, each character (or sign) Qc is associated with a plurality of sounds (or voices) Qs.

In the illustrated example, the character codes a001 to a003 are associated with the same Chinese character for "laugh" and with different sounds A1 to A3. Character code a004 is associated with the Chinese character for "laugh," as in the case of character codes a001 to a003, but no sound is associated therewith. Namely, when the same character (or sign) Qc has a plurality of corresponding sounds (or voices) Qs, the same character (or sign) Qc is associated with a plurality of character codes Q for the individual sounds (or voices) Qs.

A newly created original sign, such as the pictogram for lightening, is also associated with different sounds B1 and B2 which are associated with separate character codes b003 and b004.

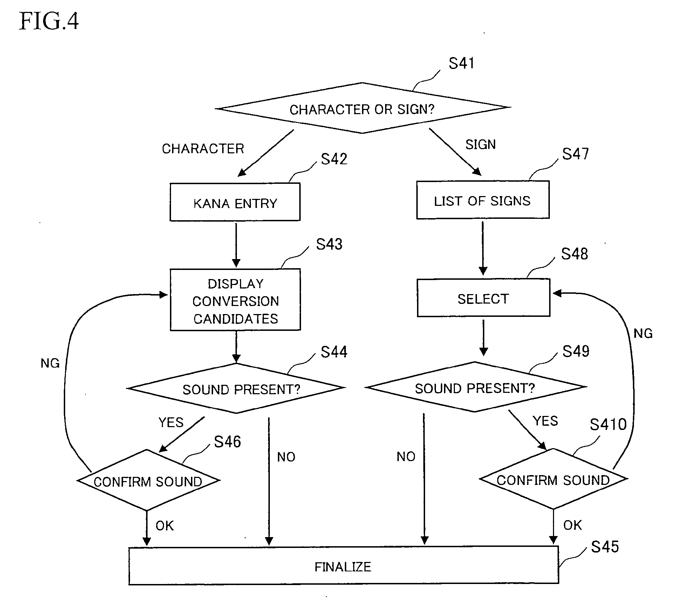

In the following, a method of creating electronic mail in the electronic mail terminal 10 is described with reference to a flowchart shown in Fig. 4.

The flowchart of Fig. 4 is that of an example of input method used in the electronic mail terminal as the character code using device of the present embodiment.

First, the user enters a mail creation instruction by operating the input device 11 in a predetermined manner.

Upon reception of the mail creation instruction via the input device 11, the control unit 14 starts up the mailer 17 and enters in a mail creation mode. Under the control of the mailer 17, the control unit 14 controls the operation of the display device 12, the communication device 13, the speaker 15, and the recording unit 16 in mail creation mode.

The user confirms the activation of the mail creation mode by the mailer 17 via the display of a mail creation screen on the display device 12, for example. The user then enters characters or signs using the character keys or sign keys and the like on the input device 11 to create mail.

When performing the mail creating entry step, the user determines whether the entry is a character or a sign (step S41). If it is a character, the user enters the kana reading of the character via the input device 11 (step S42).

Upon entry of the kana reading of the character from the input device 11, the control unit 14 in mail creation mode in step 43 calls up character data corresponding to the entered kana reading from the character recording unit 16b in the recording unit 16, and temporarily stores as a conversion display character candidate. If there are multiple pieces of character data recorded in the character recording unit 16b that correspond to the kana-entered reading, the control unit 14 also calls up each of those multiple, different pieces of character data corresponding to the same reading from the character recording unit 16b, and temporarily stores them as separate conversion display character candidates.

The control unit 14 then refers to the character code recording unit 16a and searches for character codes associated with the individual pieces of the identifying data for the character data thus temporarily stored as conversion display candidates. The control unit 14 then generates a plurality of conversion candidates in association with the character codes individually, even if they correspond to the same character data.

Thus, if there are a plurality of character codes in the character code recording unit 16a that have identifying data associated with the character corresponding to the character data called up from the character recording unit 16b, the control unit 14 displays on the display device 12 as many characters, as separate conversion candidates, for the same character data as the number (of types) of the character codes in association with the individual character codes.

Upon displaying on the display device 12 the characters for the same character data as separate conversion candidates for the individual character codes, the control unit 14 indicates those characters of the character data corresponding to the conversion candidates associated with the character codes with which sound or voice is associated by, for example, adding a sign to the displayed character of the relevant conversion candidate, or changing the display color of such character from the color of those characters associated with the character codes with which no sound or voice is associated.

If there are a plurality of characters having the same character data associated with the character codes with which sound or voice is associated, the control unit 14 indicates distinguishes such characters by, for example, dividing the sign indicating the association of sound or voice or changing their colors.

If there are a plurality of characters as conversion candidates associated with individual character codes corresponding to the kana-entered reading, the control unit 14 displays those characters as conversion candidates either one by one in response to the user's conversion operation via the input device 11 or all at once on the display device 12, so as to let the user select a character and sound or voice associated with a character code.

Upon display of the conversion candidate characters on the display device 12 corresponding to the kana-entered reading, the user selects a desired character from the conversion candidate characters by performing a selection operation on the input device 11.

Thus, when selecting a desired character from the conversion candidate characters, the user simultaneously selects either a character associated with sound or a character associated with no sound.

Upon selection by the user of the desired character from the conversion candidate characters, the control unit 14 determines in step S44 whether the conversion candidate character selected by the selection instruction via the input device 11 corresponds to a character code with which sound or voice is associated, or to a character code with which no sound or voice is associated.

In this determination, when the character is determined to correspond to a character code with which no sound or voice is associated, the character may be a character that does not include any character code associated with sound or voice in the first place, or it may be a character that does include a character code associated with sound or voice but simply one of the character codes that is not associated with sound or voice may have been selected.

Upon the user's selection, via the operation of the input device 11, of a conversion candidate character with which no sound or voice is associated, the control unit 14 finalizes the character (step S45).

On the other hand, if the user operated the input device 11 and selected a candidate corresponding to a character code with which sound or voice is associated, the control unit 14 refers to the character code recording unit 16a and calls up the sound or voice associated with that character code from the sound recording unit 16c, and reproduces and outputs the associated sound or voice via the speaker 15 (step S46).

If the reproduced sound is confirmed to be as intended, the user performs a finalization instructing operation using the input device 11, whereby the character corresponding to the character code associated with the reproduced sound or voice is associated is finalized (step S45). The user, if there is a problem with the reproduced sound, returns to step S43 without performing the finalization instructing operation on the input device 11 to have the conversion candidates displayed again, and then selects a desired character associated with a character code again.

In the foregoing description, upon selection from the conversion candidates a desired character associated with a character code, if the character associated with the selected character code is not associated with sound or voice, the selected candidate is finalized by the selecting operation; on the other hand, if the character associated with the selected character code is associated with sound or voice, the associated sound or voice is produced and then the candidate is finalized after confirmation by the user via the input device 11.

In a variation, when the character associated with the selected character code is associated with sound or voice, if that character does not require confirmation because it is very often used, for example, the operation in step S46 for generating the reproduced sound and confirmation may be omitted, so that the finalization in step S45 can be automatically achieved.

In this case, it is possible to set, via the input device 11 in advance, a generation/confirmation omitting mode in step S46 for the reproduced sound associated with the character with which sound or voice is associated, by associating that mode with the sound (or voice) Qs (see Figs. 2 and 3) in the character code recording unit 16a, for example. In this way, if the desired character selected from among the conversion candidate characters corresponds to a character code associated with sound or voice, the control unit 14 first determines if the generation/confirmation omitting mode is set for the reproduced sound; if not, the control unit 14 carries out the reproduced sound generating and confirmation operations in step S46. If the generation/confirmation omitting mode is set, the selected candidate can be finalized, as in the case of a selected character corresponding to a character code with which no sound or voice is associated (step S45).

For the creation of mail, the user determines whether the entry is a character or a sign (step S41); if it is a sign, the user inputs an instruction to display a list of signs via the input device 11 (step S41).

Upon entry of the instruction to display a sign list via the input device 11, the control unit 14 in mail creation mode in step 47 calls up a set of registered signs from the character recording unit 16b of the recording unit 16, and then temporarily stores it as conversion display character candidates.

The control unit 14 refers to the character code recording unit 16a and searches for character codes associated with the same identifying data as the identifying data for the individual pieces of the sign data temporarily stored as the conversion display candidates. The control unit 14 then generates a plurality of conversion candidates for the retrieved character codes individually even if they are associated with the same sign data. Thus, if there are a plurality of character codes in the character code recording unit 16a that have identifying data corresponding to a sign associated with the sign data called up from the character recording unit 16b, the control unit 14 displays as many signs of the same sign data on the display device 12 as the number (of types) of, and in association with, the character codes, as separate conversion candidates.

Signs associated with those character codes with which sound or voice is associated are indicated, when they are displayed, by the control unit 14 adding a sign to the sign or changing the color thereof, so that such signs can be distinguished from the same sign associated with a character code with which no sound or voice is associated, or from the same sign associated with a character code associated with another sound or voice.

Thereafter, as in the case of the character, upon entry of an instruction to select a desired sign via the input device 11 (step S48), the control unit 14 determines whether or not the selection-instructed sign corresponds to a character code with which sound or voice is associated, or to a character code with which no sound or voice is associated (step S49). If the sign corresponds to a character code associated with no sound or voice, the sign is finalized (step S45); if it is a sign corresponding to a character code with which sound or voice is associated, the reproduced sound of the associated sound or voice is produced (step S410), and then the sign is finalized upon entry of a finalizing instruction from the user via the input device 11 (step S45).

In the above-described structure, upon entry of a desired sign by the user, the control unit 14, responsive to the instruction to display the sign list via the input device 11, displays the set of signs registered on the character recording unit 16b on the display device 12 in the form of a list, from which a desired sign is selected. The method of entry is not limited to this; for example, the signs may be allocated beforehand with pronunciation so that they can be entered in the same sequence as in the case of the character.

By repeating the foregoing operations, the electronic mail created in the electronic mail terminal as the character code using device of the present embodiment is re-configured into corresponding character codes. After the electronic mail address or the like is designated by the user on the input device 11, the control unit 14, responsive to a transmission operation by the user, transmits the mail via the communication device 13 to the server computer of the communications company on the sender end, from which it is further transmitted to the electronic mail address on the receiving end.

In the electronic mail terminal as the character code using device according to the present embodiment, when there are a plurality of sounds (including no sound as one of the sounds) associated with the character of a single piece of character data or the sign of a single piece of sign data called up from the character recording unit 16b, the same characters or the same signs are displayed redundantly on the display device 12 from the beginning as conversion candidates in association with the individual character codes even if the characters have the same character data or the signs have the same sign data. The method of displaying the conversion selection candidates is not limited to this. For example, even when a plurality of sounds are associated with the character of a single piece of character data or the word of a single piece of sign data, the following configuration may be employed. Namely, instead of redundantly displaying on the display device 12 as described above, the character of the single piece of character data or the sign of the single piece of sign data may be initially displayed as a selection candidate, and, only upon selection by the user's selecting operation, of the character of the single piece of character data or the sign of the single piece of sign data with which a plurality of sounds or voices are associated, the plurality of sounds associated with the character of the single piece of character data or the sign of the single piece of sign data may be individually displayed as candidates, wherein one of the sounds is then selected and finalized.

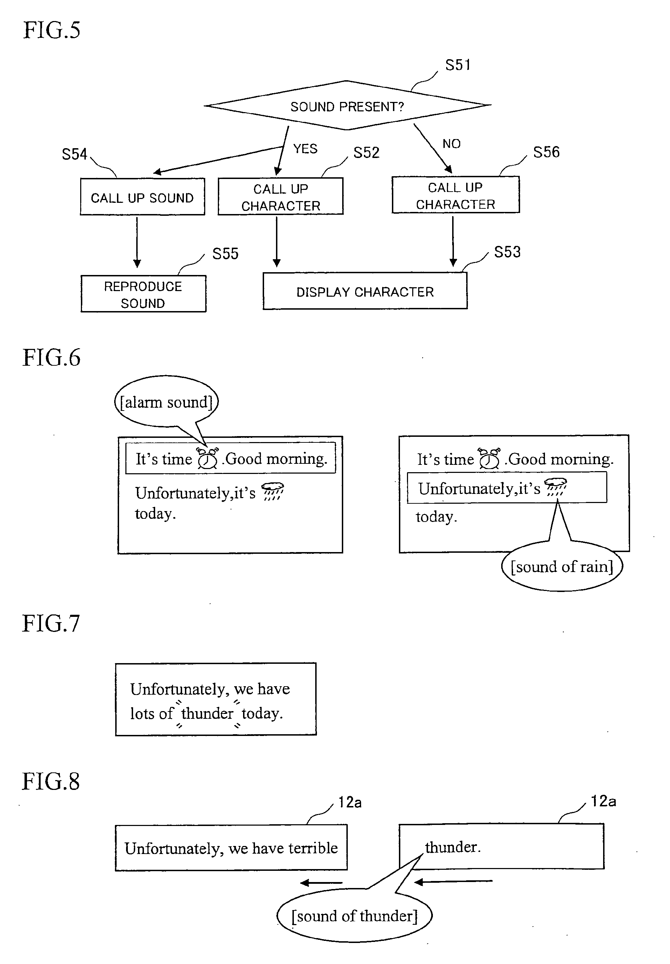

In the following, a method of displaying a character or sign and a method of reproducing sound or voice in the electronic mail terminal on the receiving end are described with reference to a flowchart shown in Fig. 5. The structure of the electronic mail terminal on the receiving end is the same as that of the electronic mail terminal 10 on the transmitting end shown in Fig. 1. Therefore, similar components are designated with similar designations or reference numerals in the following description.

Fig. 5 shows a flowchart of the methods of displaying received mail and reproducing sound in the electronic mail terminal as the character code using device of the present embodiment.

First, the user enters a mail reception instruction by operating the input device 11 in a predetermined manner.

The control unit 14, upon reception of the mail reception instruction from the input device 11, starts up the mailer 17 and enters into mail reception mode. Under the control of the mailer 17, the control unit 14 controls the operation of the display device 12, the communication device 13, the speaker 15, and the recording unit 16 in mail reception mode.

After confirming the activation of the mail reception mode by the mailer 17 on the mail reception screen on the display device 12, for example, the user opens the desired received mail using the input device 11.

As the mailer 17 is activated, upon entry of the opening instruction by the user via the input device 11 with regard to desired reception mail, the control unit 14 under the control of the mailer 17 receives corresponding received mail from the server computer of the communications company on the receiver end via the communication device 13, and temporarily stores it in a received mail memory area (not shown) of the memory unit 16.

With regard to the thus temporarily stored received mail, the control unit 14 determines, with reference to the character code recording unit 16a recorded in the recording unit 16, whether or not each of the character codes of which the mail content is composed is allocated with sound or voice (step S51).

If the control unit 14 determines that, as a result of the referencing of the character code recording unit 16a, the analyzed character code is associated with sound or voice, the control unit 14 calls up associated character data or sign data from the character recording unit 16b and the voice data corresponding to the associated sound or voice from the sound recording unit 16c (step S52, S54).

On the other hand, if the control unit 14 determines that, as a result of the referencing of the character code recording unit 16a, the analyzed character code is not associated with sound or voice, the control unit 14 calls up the associated character or sign alone from the character recording unit 16b (step S56).

In steps S52 and S56, the character data or sign data called up from the character recording unit 16b are displayed by the control unit 14 on the display device 12 in a predetermined order designated in the mail content (step S53).

In step S54, the voice data for the sound or voice called up from the sound recording unit 16c is reproduced by the control unit 14 at a predetermined timing and outputted via the speaker 15 (step S55).

Hereafter, an example of reproduction of the sound or voice in the received mail by the control unit 14 is described with reference to Figs. 6 to 8.

Fig. 6 shows an example illustrating how, on the electronic mail terminal as the character code using device of the present embodiment, the voice in received mail containing a character code associated with sound or voice is reproduced and how the mail is displayed.

In the example of Fig. 6, the character code associated with sound or voice is reproduced on a line by line or a column by column basis.

Initially, a case is considered in which the user operates the input device 11 in a certain manner so as to have received mail displayed on the screen, the mail including the following Japanese passage containing signs: "It's time [alarm clock]. Good morning. Unfortunately, it's [rain] today." (the portions enclosed in the brackets in the quoted passage are expressed with pictograms.) If the first line, for example, of the received mail is designated on the screen of the display device 12, the control unit 14 determines whether or not the thus designated first line contains a character or sign associated with a character code associated with sound or voice. If the designated first line of the received mail contains the character code for a character or sign associated with sound or voice, the control unit 14 calls up the voice data for the sound or voice associated with the relevant character code from the sound recording unit 16c, and reproduces it as the sound or voice associated with the character or sign via the speaker 15.

In the example of Fig. 6, the pictogram for the [alarm clock] is the sign corresponding to the character code associated with sound. Thus, the control unit 14 reproduces the voice data (alarm sound, such as "Zirrrrrrrrrr") that is called up in association with the character code from the sound recording unit 16c via the speaker 15.

Thereafter, if the user has designated the second line in the received mail on the screen of the display device 12 by operating the input device 11 in a predetermined manner, the control unit 14 determines whether or not the designated second line contains a character or sign corresponding to a character code associated with sound or voice. If the second line of the received mail contains a character code for a character or sign associated with sound or voice, the control unit 14 calls up the voice data for the relevant sound or voice associated with the character code from the sound recording unit 16c and reproduces it as the sound or voice corresponding to the character or sign via the speaker 15.

In the example of Fig. 6, the pictogram [rain] is the sign corresponding to the character code associated with sound. Thus, the control unit 14 reproduces the voice data (sound of rain; such as "Zaaaaaa") called up in association with the character code from the sound recording unit 16c via the speaker 15.

If there are a plurality of characters or signs corresponding to character codes associated with sound or voice in the portion of the received mail designated by the user by operating the input device 11 in a predetermined manner, such as in a line, a passage, a phrase, or an area designated by the user, the control unit 14 reproduces the sounds or voices for the characters or signs corresponding to the character codes associated with sound or voice via the speaker 15 in accordance with a sound reproduction mode that is set in the control unit 14 beforehand by the user operating the input device 11 in a predetermined manner and stored in the memory unit 16.

For example, if a successive reproduction mode is set, the control unit 14 calls up the voice data for the sound or voice associated with the relevant character codes successively from the sound recording unit 16c in the order in which the characters or signs corresponding to the character codes associated with sound or voice appear in the relevant portion, and reproduces the data successively via the speaker 15. Similarly, if an initial reproduction mode is set, for example, the control unit 14 only reproduces the voice data for the sound or voice of the character or sign corresponding to the character code associated with sound or voice that appears first among the characters or signs contained in the relevant portion that correspond to character codes associated with sound or voice. If a final reproduction mode is set, the control unit calls up, from the data sound recording unit 16c, only the voice data for the sound or voice of the character or sign corresponding to a character code associated with sound or voice that appears last among the characters or signs contained in the relevant portion that correspond to character codes associated with sound or voice, and then reproduces the data via the speaker 15. When the initial reproduction mode or the final reproduction mode is set, the control unit 14 omits the reproduction of sound or voice for the other character codes contained in the relevant portion that are associated with sound or voice.

Alternatively, it is also possible to set a scan reproduction mode. In this mode, instead of designating a line, a passage, or a phrase, or having the user designate an area of the received mail, the received mail content is scanned on a character by character basis or at intervals of several characters at once, either manually or automatically. Upon designation of a character or sign corresponding to a character code associated with sound or voice, the control unit 14 calls up, from the sound recording unit 16c, the voice data of the sound or voice corresponding to the character code associated with the relevant character or sign and reproduces the data via the speaker 15.

Fig. 7 shows an example of display on a display device in the electronic mail terminal as the character code using device of the present embodiment, regarding a character code contained in received mail that is associated with sound or voice.

As shown in Fig. 7, the content of electronic mail is displayed on the screen of the display device 12, the mail containing a character or sign corresponding to a character code associated with sound or voice. In this case, the control unit 14 displays the character or sign corresponding to the character code associated with sound or voice on the screen in a manner different from the manner in which the other characters or signs corresponding to character codes with which no sound or voice is associated are displayed.

The Japanese passage shown in Fig. 7, which is a kana-Chinese-character-mixed sentence containing a character or sign corresponding to a character code associated with sound or voice, reads: "Unfortunately, we have lots of [thunder] today." In this passage, the Chinese character "thunder" corresponds to a character code associated with sound or voice. Thus, in order to distinguish it from the other characters or signs corresponding to character codes associated with no sound or voice, the control unit 14 causes the Chinese character "thunder" to look inverted or blink, or add a sign thereto, for example, when it is displayed on the display device 12.

In this case, it is possible to adopt a method of reproducing the sound or voice associated with the Chinese character "thunder," which is a character corresponding to a character code associated with sound or voice, in which the control unit 14 reproduces the sound or voice associated with the character code via the speaker 15 only when the user designated this character by operating the input device 11 in a predetermined manner.

Fig. 8 shows a variation of the display screen of the display device of the electronic mail terminal as the character code using device according to the present embodiment for displaying a character sequence in the text of received mail content, also illustrating an audio reproducing method on this display screen.

In the example shown in Fig. 8, the character sequence of the text of the received mail content is scrolled within a predetermined display area 12a (defined, e.g., by lines or columns within the display area having a predetermined number of display characters) of the display device 12 either manually or automatically. Upon a character contained in the character sequence of the text that corresponding to a character code associated with sound or voice being scrolled and reaching a specific position in the display area 12a, this is detected by the control unit 14, which then reproduces the sound or voice associated with the character code via the speaker 15.

In the example of Fig. 8 showing the character sequence of the Japanese passage: "Unfortunately, we have terrible thunder." which is a kana-Chinese-character-mixed sentence, the Chinese character "thunder" corresponds to a character code associated with sound. In the present example, upon the Chinese character "thunder" reaching the left end of the display area 12a in the screen after being scrolled either manually or automatically, the control unit 14 detects this and reproduces the relevant sound or voice via the speaker 15.

The above-described method of reproducing the sound or voice for a character or sign contained in received mail content that corresponds to a character code associated with sound is merely an example and there are various other methods.

Alternatively, the characters in the character sequence of the received mail content may be successively read out and, upon, or instead of, reading a character or sign corresponding to a character code with which sound or voice is associated, the sound or voice associated with the character code may be reproduced.

Further alternatively, a configuration may be employed in which, when there is a character sequence consisting of a mixture of Chinese characters and kana characters (such as, e.g., the character sequence of a Japanese passage "Today, unfortunately, it is [rain].") in the received mail content, where there is a character or sign (Chinese character [rain]) at the n-th (10^{th}) character position from the initial Chinese character (initial character (the first of two Chinese characters forming the word "Today")), a certain time duration, such as one second, is allocated to each character or sign (character), and the relevant sound or voice is reproduced via the speaker 15 n-1 seconds (9 seconds) after the display of this character sequence.

### Second Embodiment

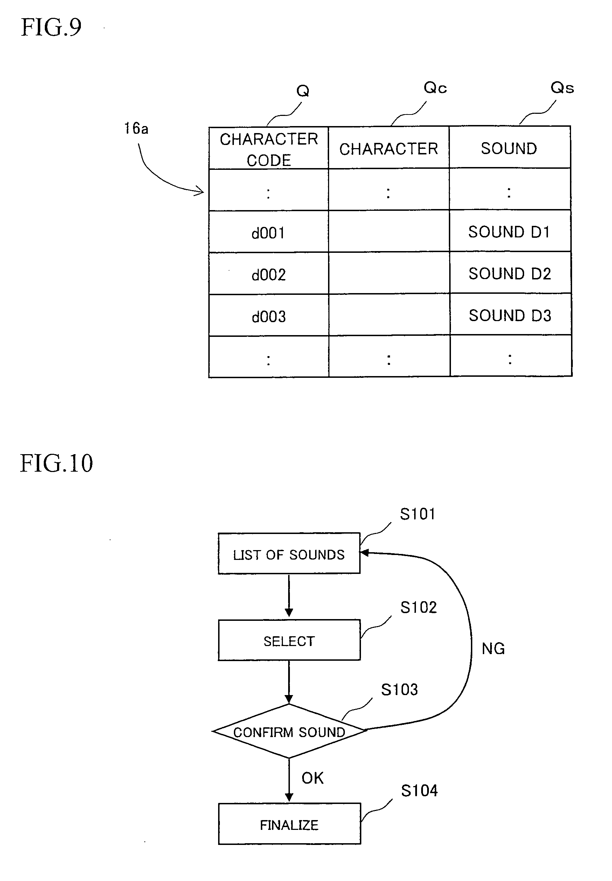

In the following, an audio reproducing method according to the present invention and a character code using device according to a second embodiment of the invention in which the audio reproducing method is applied are described with reference to Figs. 9 to 13.

In the above-described first embodiment, sound or voice is reproduced simultaneously with the display of a character or sign. In the present embodiment, sound or voice alone is reproduced without displaying characters or signs.

The structure of the electronic mail terminal as the character code using device of the present embodiment is the same as that of the electronic mail terminal as the character code using device of the first embodiment shown in Fig. 1; therefore the description of its structure is omitted.

Fig. 9 shows conceptually an example of the character code recording unit for recording character code management data in the audio reproducing method of the present embodiment.

In the character code recording unit 16a of the present embodiment, unlike the character code recording unit 16a of the first embodiment shown in Figs. 2 and 3, a character code Q is associated with sound or voice Qs alone without being associated with character or sign Qc.

Thus, when an electronic mail content containing character codes d001, d002, and d003 is transmitted via electronic mail or chat, no characters for the character data recorded in the character recording unit 16b is displayed in association with the character codes d001, d002, and d003 on the display device 12 of the electronic mail terminal 10 as the receiving end-device. Instead, the voice data for the sound or voice recorded in the sound recording unit 16c in association with the character codes d001, d002, and d003 are called up by the control unit 14, and sound D1, sound D2, and sound D3 associated with the individual pieces of voice data alone are reproduced.

Hereafter, in connection with the method of creating electronic mail on the electronic mail terminal 10 of the present embodiment, a method of entering sound or voice Qs in association with character code Q without association with character or sign Qc is described.

Fig. 10 shows a flowchart of an example of the method of entering sound or voice without association with character or sign in the electronic mail terminal as the character code using device of the present embodiment.

First, the user enters a mail creation instruction by operating the input device 11 in a predetermined manner.

Upon reception of the mail creation instruction via the input device 11, the control unit 14 starts up the mailer 17 and enters in mail creation mode. Under the control of the mailer 17, the control unit 14 controls the operation of the display device 12, the communication device 13, the speaker 15, and the recording unit 16 in mail creation mode.

The activation of the mail creation mode by the mailer 17 is indicated to the user via the display of a mail creation screen on the display device 12, for example.

If the user intends to enter sound or voice without association with any character or sign, the user enters an instruction via the input device 11 for the display of a list of character codes with which sound or voice alone is associated.

Upon reception of the instruction for the display of the list of character codes associated with sound or voice alone via the input device 11, the control unit 14 in mail creation mode refers, in step S101, to the character code recording unit 16a in the recording unit 16 and searches for character codes with which sound or voice Qs alone is associated and no character or sign Qc is associated, and then displays a list of those character codes with which sound or voice alone is associated on the display device 12.

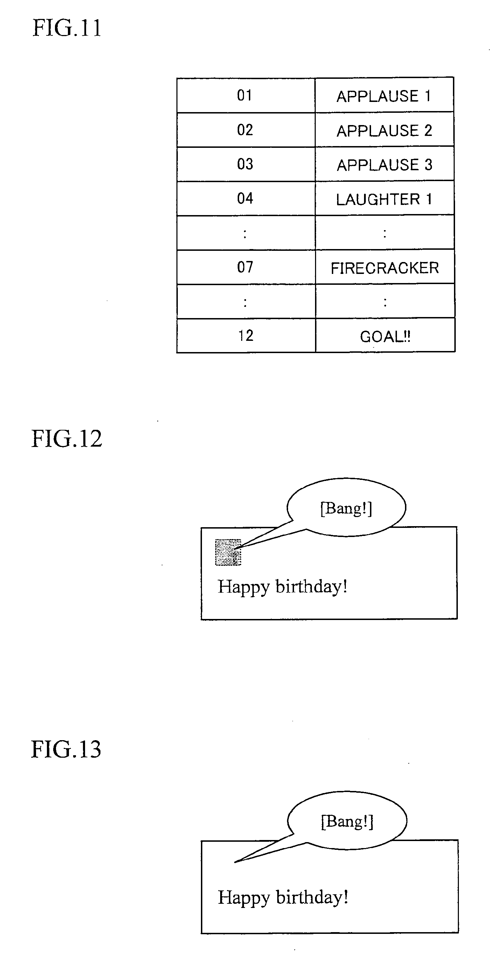

As the simple display of the character codes by themselves is not readily understandable to the user, the control unit 14 may, as shown in Fig. 11, display word data indicating the content of the sound or voice, the word data being stored in the sound recording unit 16c, for example, together with the voice data for the sound or voice.

Fig. 11 shows an example of the display of a list of character codes with which sound or voice alone is associated in the audio reproducing method of the present embodiment, illustrating how the word data indicating the content of sound or voice is associated.

The user operates the input device 11 to select a character code (or word data indicating the content of sound or voice associated with the character code) for a sound or voice he or she wishes to enter, from the list of character codes displayed on the display device 12 with which sound or voice alone is associated. Upon reception of a selection instruction entered by the operation on the input device 11, the control unit 14 calls up the voice data for the sound or voice stored in the sound recording unit 16c in association with the character code (step S102). The voice data for the sound or voice thus called up is then reproduced via the speaker 15 (step S103). The user confirms the sound or voice reproduced via the speaker 15; if the sound or voice is correct, the user performs a finalizing operation on the input device 11. In response to the user's finalizing operation entered via the input device 11, the control unit 14 finalizes the sound or voice (step S 104). On the other hand, if the sound or voice reproduced via the speaker 15 is not what the user intended, the user performs a selection once again.

Hereafter, an example of display of electronic mail created as described above that contains a character code associated with sound or voice alone is described.

Fig. 12 shows a screen showing an example of electronic mail created by the audio reproducing method of the present embodiment.

In the example of Fig. 12, the electronic mail contains a Japanese passage "[ ] Happy birthday!" (in which the bracketed portion corresponds to the word data portion, which, in the illustrated example, involves the firecracker sound).

As shown in Fig. 12, when the content of the electronic mail containing a character code associated with sound or voice alone, as it is being created or when it has been created, is displayed on the display device 12, the control unit 14 either changes the background color of the relevant portion, causes it to blink, or add a specific sign thereto. In this way, the location of the character code associated with sound or voice alone in the content can be known, so that corrections can be made later, for example.

Hereafter, the reception of electronic mail containing a character code associated with sound or voice alone is described.

Fig. 13 shows an example of a reception screen of electronic mail in which the audio reproducing method of the present embodiment is applied.

In the example of Fig. 13, the electronic mail received comprises a character code associated with sound or voice alone and a character code associated with character or sign.

In this case, since the first line consists of a character code associated with sound or voice alone, neither character nor sign is displayed on the screen of the display device 12. The receiver, however, can reproduce the sound or voice intended by the sender (such as the firecracker sound in the illustrated example) by performing a predetermined operation.

In a case where the receiver designates the relevant portion via the input device 11 to reproduce the intended sound or voice, the control unit 14 may indicate the presence of the character code associated with sound or voice by changing its background color, for example.

In the present embodiment, when the receiver replies to or transfers the mail, the control unit 14 indicates the location of the character code with which sound or voice alone is associated, as in the case of the creation screen shown in Fig. 12 that is created by the sender.

In a case where there is a character code associated with sound or voice alone at a particular location, such as in the title of the electronic mail, the control unit 14 reproduces the relevant sound automatically upon reception or opening of the mail in the electronic mail terminal 10 as the character code using device of the present embodiment.

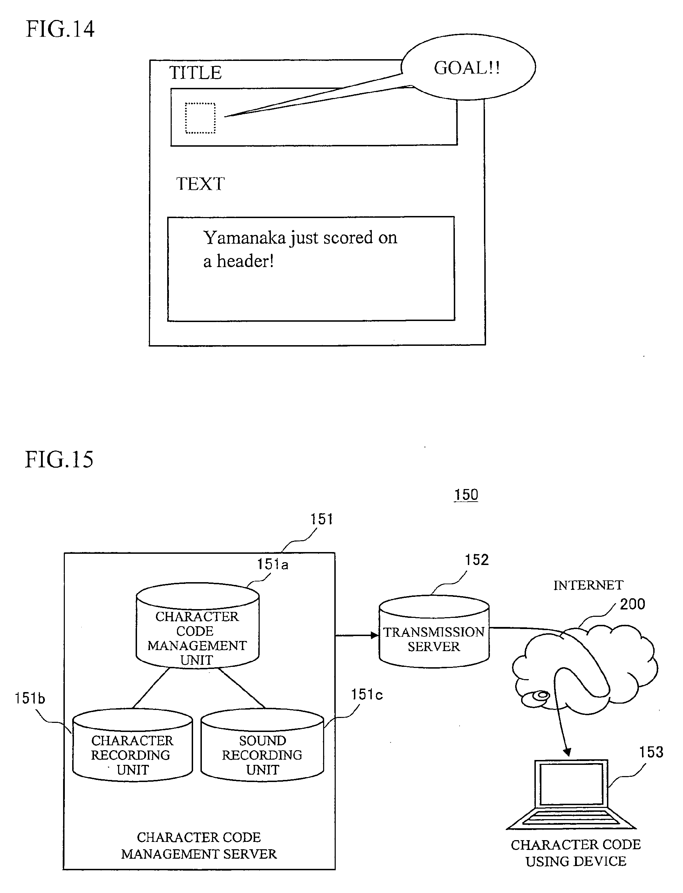

Fig. 14 shows an example of such electronic mail, in which there is a character code associated with sound or voice alone in the title portion thereof according to the audio reproducing method of the present embodiment.

In the example of Fig. 14, the character code in the title portion of the electronic mail is associated with the voice of an announcer barking "Goal!"

In the case of the electronic mail of Fig. 14, upon its reception in the electronic mail terminal 10 as the character code using device, the control unit 14 can reproduce the sound or voice designated by the sender (such as the announcer's voice barking "Goal!" in the illustrated example) via the speaker 15, instead of the ring tone.

### Third Embodiment

In the following a third embodiment of the present invention is described. The present embodiment involves a distribution service system for distributing character code management data to, and storing it in, the aforementioned character code recording unit 16a shown in Figs. 2, 3, and 9, which is provided in the memory unit 16 of the electronic mail terminal 10 as the character code using device. The embodiment also involves a character code management method for such system.

As described with reference to the foregoing embodiments, the character code management data stored in the character code recording unit 16a includes the following four kinds of character code management data: (1) character codes associated with character or sign alone; (2) character codes associated with sound or voice alone; (3) character codes associated with both character or sign and sound or voice; and (4) character codes with which neither character or sign, nor sound or voice is associated.

After the manufacture of a character code using device 153 (see Fig. 15 below; corresponding to the aforementioned electronic mail terminal 10), if a character or sign is developed that is not associated with a character code at the time of manufacture, or if a sound or voice is associated with any character code later, such character code cannot be used in the character code using device 153 manufactured earlier.

In order to allow such later-associated character or sign, or sound or voice to be utilized, the distribution service system is provided according to the embodiment of the invention, by which new character code management data and the like is transmitted to the character code using device 153, as described below with reference to Fig. 15.

Fig. 15 shows the distribution service system of the embodiment.

A character code transmission service system (distribution service system) 150 comprises a character code management server 151, a transmission server 152, and a character code using device 153.

The character code management server 151 is installed at the manufacturer of the character code using device 153, an after-sales service company for the device, a communications company or the like. It is connected to the transmission server (distribution server) 152. Thus, the character code management server 151 can transmit data via the transmission server 152 and the Internet 200 to the character code using device 153.

The character code management server 151 comprises a character code management unit 151a, a character recording unit 151b, and a sound recording unit 151c.

The character code management unit 151a records and manages latest character code management data. Specifically, it records and manages the following four kinds of character code management data: (1) character codes associated with character or sign alone; (2) character codes associated with sound or voice alone; (3) character codes associated with both character or sign and sound or voice; and (4) character codes associated with neither character or sign nor sound or voice.

The character recording unit 151 b records character data and sign data, such as kana entry reading and display data, for example, for the conversion of individual characters and signs recorded in association with character codes.

The sound recording unit 151c records voice data for the production of various sounds or voices on the character code using device 153.

In the thus configured distribution service system 150, when setting a new sound that is not recorded in the character code management server 151, for example, the administrator of the character code management server 151 records the relevant sound data in the sound recording unit 151 c and also associate the sound data with a character code in the character code management unit 151a.

Upon recording of new character or sign data, or new sound or voice data, or both new character or sign data and new sound or voice data in the character recording unit 151b or the sound recording unit 151 c, such data is transmitted, together with the associated character code recorded and managed in the character code management unit 151a, to the character code using device 153 via the transmission server 152. The transmission may be performed by the transmission server 152 either automatically or in response to a request from the character code using device 153.

The function of the character code using device 153 is described with reference to the electronic mail terminal 10, for example, shown in Fig. 1. The newly added or updated character code management data, character or sign data, or sound or voice data distributed from the data character code management server 151 via the Internet 200 is received by the electronic mail terminal 10 via the communication device 13. In response, the control unit 14 records the thus received character code management data in the character code recording unit 16a of the recording unit 16. The control unit 14 also records the newly added or updated character or sign data in the character recording unit 151 b in association with the relevant character codes, and records the newly added or updated sound or voice data in the sound recording unit 16b in association with the relevant character codes.

Thus, when character code management data is generated in which the character code for the Chinese character "thunder," which is 979B according to S-JIScode, is newly associated with the sound data for thunder, such as "rumble rumble," the character code management server 151 transmits the thus generated character code management data and sound data to each character code using device 153 to record therein, so that expression with sound as well as character can be made possible.

Transmission of data may involve a kiosk terminal or a variety of memory cards, for example, in addition to the Internet. Data may also be transmitted from a character code using device in which new data is already recorded to an unrecorded character code using device.

## Claims

1. An audio reproducing method comprising associating a character code with a character or sign and a sound or voice, wherein the associated sound or voice is reproduced upon display of the character or sign associated with the same character code.

2. An audio reproducing method comprising newly associating an unused character code with a character or sign and also with a sound or voice, and reproducing the sound or voice upon display of the character or sign associated with the same character code.

3. The audio reproducing method according to claim 1 or 2, comprising associating a character or sign with one or more character codes associated with sound or voice, and associating the same character or sign with a character codes associated with no sound or voice, and reproducing or not reproducing the sound or voice upon display of the same character or sign depending on the character code.

4. An audio reproducing method comprising associating a character code with no character or sign but with a sound or voice alone, and reproducing the sound or voice associated with the character code without displaying any character or sign.

5. A character code using device comprising:
a) character code recording means for recording a character code and a character or sign or a sound or voice associated with the character code;
b) character code reception means for receiving the character code via a communication device;
c) call-up means for calling up the character or sign or the sound or voice associated with the character code received by the character code reception means, based on the recorded content in the character code recording means;
d) display means for displaying the character or sign called up by the call-up means; and
e) voice output means for outputting the sound or voice called up by the call-up means.

6. The character code using device according to claim 5, further comprising:
f) registration means for entering and recording the character or sign, or the sound or voice, in the character code recording means.

7. The character code using device according to claim 5 or 6, further comprising communication means.

8. An audio reproducing method comprising scrolling a displayed content comprising a plurality of characters or signs vertically or horizontally, designating a line or column containing a desired display content portion, and reproducing a sound or voice associated with a character code in the designated line or column.

9. The audio reproducing method according to claim 8, comprising reproducing the sound or voice associated with the first one alone of a plurality of character codes associated with sound or voice in the designated line or column.

10. An audio reproducing method comprising changing the mode of display for a character or sign corresponding to a character code associated with sound or voice, and reproducing the sound or voice upon designation of the character or sign by a user operation.

11. An audio reproducing method comprising designating a character or sign on a character by character basis, wherein if a designated character or sign corresponds to a a character code associated with a sound or voice, the sound or voice is reproduced.

12. An audio reproducing method comprising displaying a character sequence consisting of a plurality of characters or signs within a display area defined by lines or columns containing a predetermined number of display characters, scrolling the character sequence within the display area to display the entire sentence, and reproducing a sound or voice associated with a character code upon the character code reaching a predetermined position in the displayed portion.

13. An audio reproducing method comprising allocating a certain time duration to each character or sign in a character sequence, displaying the character sequence, waiting for a duration of time corresponding to the sum of the time durations allocated to the individual characters or signs located before a character code associated with sound or voice, and then reproducing the sound or voice.

14. An audio reproducing method comprising automatically reproducing a sound or voice associated with a character code when the character code is used at a designated location.

15. An audio reproducing method comprising reading characters or signs out one by one, and reproducing a sound or voice associated with a character code corresponding to a character or sign as the character or sign is read out.

16. A distribution service system for associating a character code with which a character or sign alone is associated, or a character code with which neither character or sign nor sound or voice is associated, with a sound or voice subsequently, and transmitting the corresponding sound or voice data alone to a character code using device.

17. A distribution service system for associating a character code with which sound or voice alone is associated, or a character code with which neither character or sign nor sound or voice is associated, with a character or sign subsequently, and transmitting the corresponding character or sign data alone to a character code using device.

18. A distribution service system for associating a character code with which neither character or sign nor sound or voice is associated with both character or sign and sound or voice subsequently, and transmitting the corresponding data to a character code using device.

19. A character code management method comprising associating a character code with character or sign and sound or voice.

20. A character code management method comprising associating a character code with which no character or sign is associated with a new character or sign and sound or voice.

21. The character code management method according to claim 19 or 20, comprising providing a single character or sign with two character codes, one a character code with which sound or voice is associated and the other a character code with which no sound or voice is associated.

22. A character code management method comprising associating a character code with sound or voice alone and no character or sign.
